# EUROPÄISCHE PATENTSCHRIFT

(11) **EP 1 444 818 B1**
(45) Veröffentlichungstag und Bekanntmachung des Hinweises auf die Patenterteilung: **03.06.2009**
(21) Anmeldenummer: 02785048.6
(22) Anmeldetag: 05.11.2002
(51) Int. Cl.: H04M 1/725

(54) **VERFAHREN ZUR VEREINHEITLICHUNG DER BEDIENSTEUERUNG BEI MOBILFUNKENDGERÄTEN**
METHOD FOR STANDARDIZING THE OPERATION CONTROL OF MOBILE RADIO TERMINALS
PROCEDE POUR UNIFORMISER LA MANIPULATION DE TERMINAUX DE RADIOTELEPHONIE MOBILE

(30) Priorität: 06.11.2001 DE 10153946
(43) Veröffentlichungstag der Anmeldung: 11.08.2004
(73) Patentinhaber: T-Mobile Deutschland GmbH, 53227 Bonn (DE)
(72) Erfinder: HOLTSTIEGE, Ulrich, 48329 Havixbeck (DE)
(74) Vertreter: Riebling, Peter
(86) Internationale Anmeldenummer: PCT/DE2002/004100
(87) Internationale Veröffentlichungsnummer: WO 2003/041373

(56) Entgegenhaltungen:
- EP-A- 0 812 120
- EP-A- 0 980 175
- WO-A-00/54530
- DE-A- 19 801 576
- GB-A- 2 322 045
- US-A1- 2001 034 224
- US-A1- 2002 137 502

## Beschreibung

Die Erfindung betrifft ein Verfahren zur Vereinheitlichung der Bediensteuerung bei Mobilfunkendgeräten nach dem Oberbegriff des Patentanspruchs 1.

Derzeit verfügt jedes Mobilfunkendgerät über eigene, vom Hersteller vorgegebene Bedienprozeduren für die einzelnen Funktionen des Geräts. Die Bedienprozeduren basieren bei den meisten Endgeräten auf einer menügesteuerten Mensch-Maschine-Schnittstellen (MMI: Man-Machine-Interface). Beim Wechsel zu einem anderen Endgerät ist der Mobilfunkteilnehmer daher gezwungen, sich die Bedienprozeduren des neuen Endgerätes einzuprägen. Ein generisches Bedienkonzept für alle Mobilfunkendgeräte existiert bisher nicht am Markt.

Aus der DE 198 01 576 A1 und der EP 0 812 120 A2 sind Verfahren zur menüunterstützten Bediensteuerung bei Mobilfunkendgeräten bekannt. Hierbei werden im Endgerät Funktionen zur Steuerung von speziellen Mobilfunkdiensten angeboten. Eine Schaffung von einheitlichen Bedienprozeduren für alle Mobilfunkendgeräten wird nicht angestrebt.

Die EP 0 980 175 A2 befasst sich mit einem Verfahren zur Anzeige von Daten über Zielteilnehmer innerhalb einer privaten Nebenstellenanlage. Daten von externen Zielteilnehmern, die nicht Teil der Nebenstellenanlage sind, können erfasst und angezeigt werden.

EP 0 812 120 A2 beschreibt ein Mobilfunksystem mit der Möglichkeit, Servicefunktionen in ein Mobiltelefon zu laden und nutzbar zu machen.

GB 2 322 045 A offenbart einen auswechselbaren Datenspeicher, z.B. eine SIM-Karte, in welchem Kurzrufnummern im nationalen und internationalen Format gespeichert sind.

Die Aufgabe der Erfindung besteht darin, ein Verfahren für die Schaffung von einheitlichen Bedienprozeduren als Mensch-Maschine-Schnittstellen (MMI's) für die Steuerung von Funktionen von Mobilfunkendgeräten vorzuschlagen, wobei außerdem Funktionen vorgesehen sein sollen, welche dem Benutzer eine komfortablere Benutzung des Mobilfunkendgeräts erlauben.

Diese Aufgabe wird erfindungsgemäß durch die in Anspruch 1 angegebenen Merkmale gelöst.

Es wird ein sogenanntes MMI-Portal eingerichtet, über das die Mobilfunkteilnehmer unter einer einheitlichen Benutzeroberfläche und weitgehend unabhängig vom verwendeten Endgerät bestimmte Dienste des Mobilfunknetzes nutzen können. Die Dienste können zum einen bekannte Zusatzdienste (Supplementary Services), wie Rufnummernpräsentation, Rufweiterleitung etc., oder Mehrwertdienste (Value Added Services), wie Verkehrsinformationen etc., sein. Darüber hinaus können auch neue Dienste angeboten werden. Hierzu wird im Mobilfunkendgerät ein MMI-Client installiert, der über die Luftschnittstelle mit einem MMI-Server im Mobilfunknetz kommuniziert, wobei im MMI-Client verschiedene Bedienprozeduren zur Ausführung von Funktionen des Mobilfunkendgerätes menügesteuert abgelegt sind, und die Ausführung der ausgewählten Funktionen entweder endgerätebasiert anhand von im Mobilfunkendgerät abgelegten funktionalen Prozeduren und / oder netzbasiert anhand von im MMI-Server abgelegten funktionalen Prozeduren erfolgt.

Erfindungsgemäß handelt es sich um Bedienprozeduren und Funktionen, die es dem Teilnehmer ermäglichen, schon vor Anwahl eines anderen Telefonschlusses mehr über dessen aktuellen Status zu erfahren. Der Status gibt z.B. an, ob ein anderer Telefonanschluß frei, besetzt, abgeschaltet, etc., ist. Das Menü bietet dem Teilnehmer vom jeweiligen Status abhängige Auswahlmöglichkeiten an, wie mit dem Anruf verfahren werden soll. Statt eines nicht erfolgreichen Anrufs kann der Anrufer schon im Vorfeld entscheiden, was er tun möchte. Der Teilnehmer kann auswählen, ob sein Status anderen Teilnehmern mitgeteilt werden soll. Dabei kann der Teilnehmer entscheiden, ob alle anderen Teilnehmer oder nur eine begrenzte Teilnehmergruppe seinen Status "sehen" dürfen.

Dadurch, dass die Teilnehmer bereits vor dem Absetzen eines Anrufs erkennen können, ob der betreffende Anschluss erreichbar ist oder nicht, können sie qualifiziert entscheiden, ob sie die Wahl durchführen wollen, stattdessen direkt die Mobilbox anrufen wollen oder alternativ eine Kurznachricht (SMS) abschicken. Der MMI-Client unterstützt den Teilnehmer dabei durch die Anzeige eines Menüs mit den zur Verfügung stehenden Möglichkeiten.

Der MMI-Client basiert vorzugsweise auf WAP-, K-Java- oder SAT- Funktionen. Java ist eine Programmiersprache für Hypermedia-Dokumente, die d7em Entwickler z.B. erlaubt, Internet- bzw. WAP-Seiten mit verschiedenen, auch interaktiven Funktionen auszustatten.

WAP (Wireless Application Protocol) ist eine von verschiedenen Mobilfunkherstellern initiierte Spezifikation und definiert u.a. Eckwerte für sogenannte Mikro-Browser, mit denen Internet-Inhalte auf dem Display eines Mobilfunkendgerätes dargestellt werden können.

Das SIM Application Toolkit (SAT) erlaubt es, auf der SIM-Karte eines Mobilfunkendgerätes z.B. ein Untermenü anzulegen, um schnellen Zugriff auf zusätzliche Funktionen oder Informationsdienste des Mobilfunknetzes zu haben.

Durch die Erfindung wird in vorteilhafter Weise erreicht, dass ein Teilnehmer bei Wechsel zu einem anderen Mobilfunkendgerät keine neuen Bedienprozeduren lernen muss.

Die generischen Prozeduren können maßgeschneidert auf das Angebot des jeweiligen Mobilfunknetzbetreibers angepasst werden. Zum Beispiel kann die Rufumleitung auf die Mobilbox als eigener Menüpunkt angeboten werden, ohne dass sich der Teilnehmer Gedanken um die konkrete Adressierung der Mobilbox machen muss.

Zusätzlich können die einzelnen Funktionen mit ausführlicheren Hilfe- und Erläuterungstexten versehen werden, die im Mobilfunknetz gespeichert sind und auf dem Mobilfunkendgerät keinen Platz haben.

In einer Ausgestaltung der Erfindung ist vorgesehen, dass eine Prozedur zur automatischen Abspeicherung von Namen zu einer dem Teilnehmer bekannten Rufnummer erfolgt. Der Name kann von Netz- bzw. Dienstebetreiber oder vom Besitzer der Rufnummer vorgegeben werden und wird dem MMI-Server zur Verfügung gestellt. Über den MMI-Client und eine bestimmte anwählbare Funktion kann der einer Rufnummer zugeordnete Name vom Mobilfunknetz herunter geladen werden. Das lästige Eintippen von Namen bei der Speicherung in das Telefonbuch entfällt.

Teilnehmer, die eine Rufnummer im Telefonbuch abspeichern wollen, können den zugehörigen Namen aus dem Mobilfunknetz laden, sofern diese Funktion vom Namensinhaber freigegeben ist. Sie müssen ihn also nicht selber eintippen.

In einer weiteren Ausgestaltung der Erfindung ist die Schaffung einer Prozedur vorgesehen, mit der eine automatische Umwandlung von Rufnummern, die im nationalen Format im Telefonbuch eingetragen sind, in das internationale Format durchgeführt wird. Dies vereinfacht die Rufnummerneingabe bei der Speicherung im Telefonbuch.

Viele Mobilfunkteilnehmer speichern die Rufnummern im Telefonbuch nur im nationalen Format ab, d.h. ohne die Länderkennziffer, z.B. 0049 für Deutschland. Im Roamingfall, also beim Telefonieren aus dem Ausland, ist der Eintrag dann nicht mehr nutzbar. Die hier beschriebene Funktion wandelt die Rufnummern des Telefonbuchs automatisch in das internationale Format um.

Die beschriebenen Dienste, welche auf dem erfindungsgemäßen MMI-Portal basieren, stellen einer Weiterentwicklung der in allen GSM-Endgeräten vorhandenen Telefonbuchfunktion dar.

Die sogenannte Statusinformations-Funktion gibt mit Hilfe einer graphischen Oberfläche den aktuellen Status jedes Anschlusses, z.B. eingebucht / nichteingebucht, frei / besetzt, und gegebenenfalls noch weitere Stati, der
- im SIM-Telefonbuch des Teilnehmers gespeichert ist und
- die Berechtigung dafür freigegeben hat,
auf dem Display des Endgerätes wieder. In Abhängigkeit vom Status werden dem Teilnehmer vor dem Absenden der Wahl bestimmte Optionen angeboten.

Durch eine Name zu Nummer Funktion wird dem Teilnehmer die Möglichkeit angeboten, zu einer vorhandenen Mobilfunk-Rufnummer den vom Mobilfunkbetreiber, Service-Provider oder vom Eigner dieser Rufnummer vorgegebenen Benutzernamen zu ermitteln, vom Mobilfunknetz herunterzuladen und im Mobilfunkendgerät abzuspeichern. Damit kann das mühsame Eintippen von Namen eingespart werden.

Anhand einer Formatwandlungs-Funktion können die oft im nationalen Format im Telefonbuch eingetragen Rufnummern auf Wunsch des Teilnehmers automatisch in das internationale Format gewandelt werden.

Ein Ausführungsbeispiel der Erfindung wird nachfolgend anhand der Zeichnungen beschrieben. Aus den Zeichnungen und ihrer Beschreibung ergeben sich weitere Merkmale, Vorteile und Anwendungen der Erfindung. Dabei zeigt:
- Figur 1:: eine schematische Darstellung des erfindungsgemäßen Client / Server-Prinzips:
- Figur 2:: ein Beispiel für den Download der spezifischen MMI's;
- Figur 3:: ein Beispiel für die Sperre der Statusdaten bzw. eine eingeschränkte Freigabe der Statusdaten;.
- Figur 4:: ein Beispiel für die generelle Freigabe der Statusdaten;
- Figur 5: ein Beispiel für das Auslesen und Editieren des eigenen Namens, so wie er anderen Teilnehmern präsentiert werden soll;
- Figur 6:: ein Beispiel für einen Verbindungsaufbau zu einem als frei gekennzeichneten Anschluss;
- Figur 7:: ein Beispiel für die Möglichkeiten bei einem besetztem Anschluss;
- Figur 8:: ein Beispiel für einen Anruf zu der Mobilbox eines besetzten Anschlusses;
- Figur 9:: ein Beispiel für das Absenden einer Kurznachricht (SMS) zu einem besetztem Anschluss;
- Figur 10:: ein Beispiel für die Umwandlung der Rufnummern der Telefonbucheinträge in internationales Format.

Die beschriebenen Anwendungsfälle sind nur beispielhaft und vereinfacht zur Veranschaulichung der Erfindung dargestellt. Bei den Prozeduren wurde die Einfachheit der Bedienung der Funktionsvielfalt vorgezogen. Damit stellt das erfindungsgemäße MMI-Portal einen Gegenpol zu den vielfältigen und dadurch komplizierteren Prozeduren der Endgeräte dar.

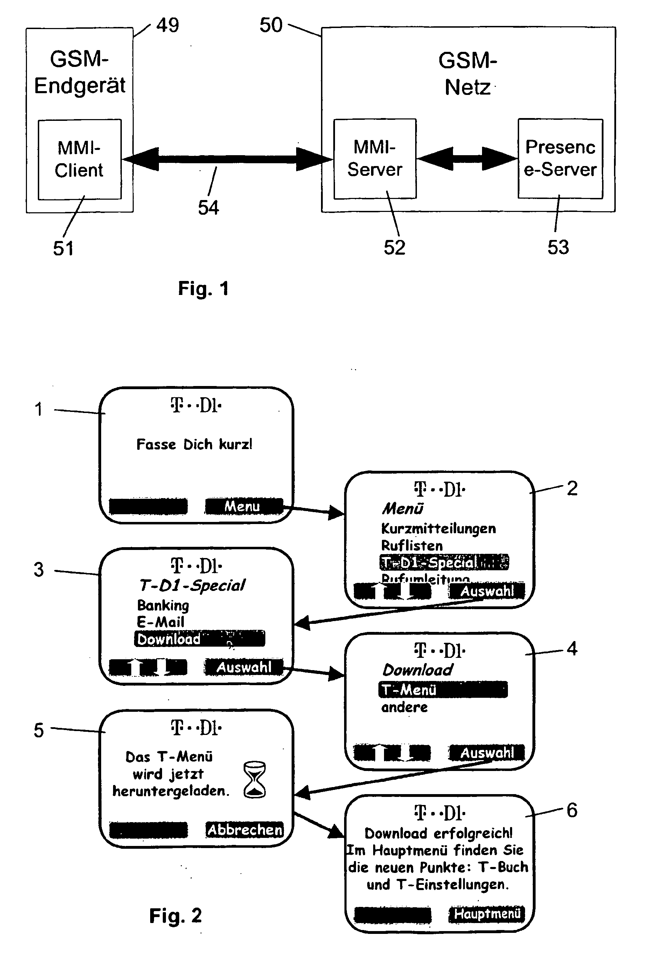

Figur 1 veranschaulicht schematisch ein Client-Server-Konzept, das sich für die Realisierung des erfindungsgemäßen Verfahrens anbietet. Im Mobilfunkendgerät 49 wird ein MMI-Client 51 implementiert, der mit einem MMI-Server 52 im Mobilfunknetz 50 über die Luftschnittstelle 54 kommuniziert. Im Endgerät (Client) werden Statusdaten gespeichert und logische Funktionen ausgeführt. Es kann ein separater, sogenannter Presence-Server 53 vorgesehen sein, der Statusdaten der Mobilfunkteilnehmer ermittelt und den MMI-Server mit diesen Statusdaten versorgt.

### Statusinformations-Funktion

Da die Statusinformations-Funktionen auf dem normalen SIM-Telefonbuch aufbauen, wird es bevorzugt, dass komplexere Funktionen wie Editierung und Löschung von Einträgen etc. über die regulären Telefonbuchfunktionen des Endgerätes durchgeführt werden.

Als Basis für die Statusanzeige wird das SIM-Telefonbuch verwendet, weil dieses standardisiert ist und weil die Statusanzeige des angewählten Anschlusses schon vor Absenden des Anrufes im Endgerät vorhanden sein muss. Mit dem SIM-Telefonbuch besteht ein bekannter und begrenzter Vorrat an Rufnummern, von denen die Statusinformation abzuholen ist. Alternativ wäre es auch denkbar, nach erfolgter Eingabe einer beliebigen Rufnummer und mit Drücken der Sende-Taste zunächst nur die Statusinformation zu holen und erst danach die eigentliche Wahl zu ermöglichen.

Der Netzbetreiber stellt die zur Ausführung der Funktionen notwendigen MMI's als Download, z.B. vom MMI-Server, zur Verfügung.

Der Teilenehmer gibt die Berechtigung zur Weitergabe seiner aktuellen Statusinformation frei bzw. sperrt diese bei Bedarf wieder. Die Berechtigung kann für alle anderen Teilnehmer des Mobilfunknetzes oder selektiv für bestimmte Anschlüsse vergeben werden. Diese Berechtigungsvergabe kann vorteilhaft mit der Berechtigungsvergabe der Name zu Nummer-Info gekoppelt werden. Diese Kopplung ist jedoch nicht zwangsweise notwendig. Der Netzbetreiber ermittelt die im Netz bekannten Statusinformationen der Anschlüsse, die dafür eine Berechtigung / Freigabe vergeben haben.

Die Teilnehmer können gegebenenfalls individuelle Statusinformationen über ihren Anschluss manuell im Netz hinterlegen. Diese könnte z.B. aus dem vom Teilnehmer eingestellten Ruftonprofil gewönnen werden, z.B. laute Umgebung, Besprechung, etc.

Berechtigte Mobilfunkteilnehmer können die Statusinformation von anderen Anschlüssen vor Absenden einer Wahl auslesen. In Abhängigkeit vom Status werden bestimmte Optionen angeboten. Z.B. bei "Besetzt" wird die direkte Wahl zur Mobilbox oder die Versendung einer SMS angeboten.

### Name zu Nummer-Funktion

Für die Zuordnung eines Namens zu einer bekannten Mobilfunkrufnummer (MSISDN) werden im wesentlichen die folgenden Funktionalitäten benötigt: Der Netzbetreiber stellt die zur Ausführung der Funktionen notwendigen oder zumindest hilfreichen MMI's als Download zur Verfügung.

Der Netzbetreiber stellt ferner den zu einer MSISDN zugehörigen Namen in einer Datenbank zur Verfügung.

Andere Service-Provider können diesen Dienst für Ihre Kunden ebenfalls anbieten, ohne dass der Netzbetreiber lesenden Zugang zu diesen Daten bekommt.

Die Eigner der MSISDN können den vorgegebenen Namen nach eigenen Vorstellungen editieren oder überschreiben.

Andere Teilnehmer des Mobilfunknetzes, die zum Auslesen des Namens berechtigt sind, können durch Übermittlung einer Rufnummer den zugehörigen Namen auslesen und im eigenen Telefonbuch speichern. Der Name kann auch editiert werden.

Die für die Statusinformations- bzw. Name zu Nummer-Funktion freigegebenen Anschlüsse müssen im Mobilfunknetz registriert, d.h. eingebucht, sein. Die Statusinformation der registrierten Anschlüsse werden quasi in Echtzeit ermittelt und anderen Teilnehmern zur Verfügung gestellt. Diese Statusinformationen sind z.B.:
- attached / detached-Status
- frei / besetzt

Gegebenenfalls können noch weitere Informationen gesammelt und weiterverwendet werden wie z.B.:
- Anklopfen ein / aus
- Lokales Ruftonprofil des Endgerätes.

Die Statusinformationen müssen bei Änderungen regelmäßig/zeitnah in den lesenden Endgeräten aktualisiert werden.

Für die Name zu Nummer Funktion müssen die im Mobilfunknetz vom Netzbetreiber/Serviceprovider bzw. vom Teilnehmer eingerichteten Namen als Zuordnung zur Rufnummer gespeichert und zugänglich gemacht werden.

Die jeweiligen Service-Provider dürfen keinen Zugriff auf die Namenslisten anderer Serviceprovider haben.

### Formatwandlungs-Funktion

Eine oder alle im Telefonbuch gespeicherten Nummern werden in das internationale Format (z.B. 0049) umformatiert, sofern die Nummern nicht schon in diesem Format gespeichert sind. Diese Funktion kann auch ausgeführt werden, wenn kein Status / Name für die Rufnummer im Netz vorhanden ist.

In Netz muss der automatische Formatwandelungsmechanismus implementiert werden.

### Menüstruktur

Die Endgeräte müssen das neue MMI aufnehmen können. Der MMI-Client muss u.a. in der Lage sein, Call Control-Funktionen zu manipulieren.

Die in den Endgeräten vorhandenen MMI's müssen um die zusätzlichen Funktionen erweitert werden. In den hier beschriebenen Beispiel werden auf der Hauptmenüebene zwei zusätzliche Punkte "T-Buch" und "T-Einstellungen" eingeführt. Die neuen Hauptmenüpunkte sind in kursiv und fett dargestellt.

| **Hauptmenü** | **1. Unterebene** | **2. Unterebene** |
|---|---|---|
| Kurzmitteilungen | | |
| ***T-Buch*** | -> *(Wahl wenn kein Status vorliegt oder frei)* | |
| | -> *Optionen (von hier aus z.B. Sprung zum Verfassen von SMS mit Übergabe der Rufnummer)* | |
| | -> *Internat. Format (Auswahl aller im Tel-Buch enthaltenen Nummern oder nur die ausgewählte)* | |
| Ruftöne | | |
| Rufumleitung | | |
| Verzeichnis (Telefonbuch) | | |
| Telefoneinstellungen | | |
| Sicherheitseinstellungen | | |
| ***T-Einstellungen*** | -> *Statusinfos (Status wird sofort ausgelesen); Sperren oder Freigeben* | -> *Freigabe (generelle oder eingeschränkte Freigabe: nur Telefonbucheinträge)* |
| | *-> eigener Name (wird sofort ausgelesen)* | -> *Ändern* |
| T-D1-Special | | |

Figur 2 zeigt ein Beispiel für den Download der spezifischen MMI's. Die spezifischen MMI's können über die Luftschnittstelle vom Mobilfunknetz auf das Endgerät heruntergeladen werden. Dafür kommen die jeweils vorhandenen und bekannten Verfahren zum Einsatz. Auf dem Mobilfunkendgerät wird das Hauptmenü ausgewählt (Schritt 1). Über ein weiteres Auswahlmenü "T-D1-Special" (Schritt 2) kommt man zum Download-Menü (Schritt 3), wo beispielsweise das "T-Menü" zum Download angeboten wird (Schritt 4). Durch Auswahl des T-Menüs wird dieses vom Mobilfunknetz auf das Endgerät heruntergeladen (Schritt 5). Ist der Download beendet, finden sich zwei neue Menüpunkte "T-Buch" und "T-Einstellungen" im Hauptmenü des Endgeräts (Schritt 6).

Die Freigabe der Statusinformation zur Weitergabe an andere Nutzer erfolgt entweder menügesteuert über einen speziellen Menüpunkt oder - für Geräte, die das MMI nicht herunterladen können - per Prozedur (SMS oder USSD). Letztere können dann auch nicht den Status der anderen sehen, sie können aber ihren eigenen Status bekannt geben.

Neben der generellen Freigabe kann der Teilnehmer bestimmte Rufnummern und Bereiche ausgrenzen. Um die Bedienung einfach zu halten, kann die Freigabe nur auf die im eigenen Telefonbuch enthaltenen Einträge begrenzt werden. Eine Verwaltung von Black- und White-Lists kann ebenfalls vorgesehen sein.

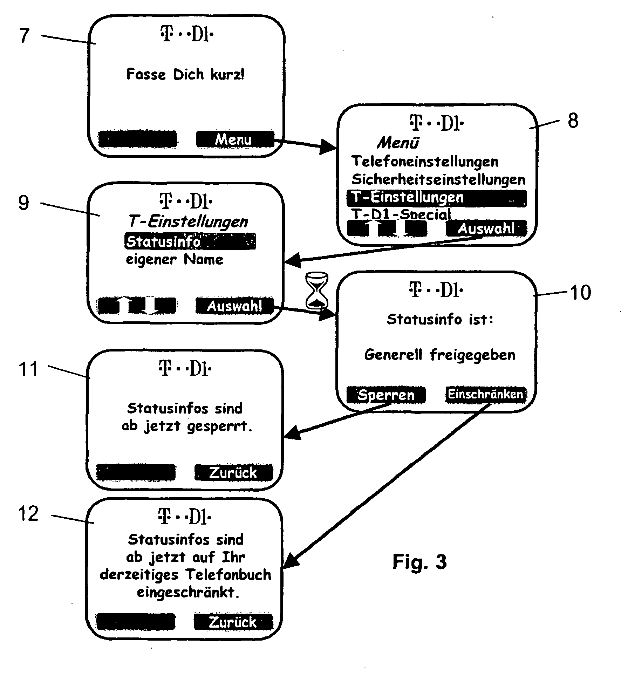

In Figur 3 ist ein Beispiel für die Sperre der Statusdaten bzw. eine eingeschränkte Freigabe der Statusdaten gezeigt. Ausgehend vom Hauptmenü des Endgeräts (Schritt 7), wird das Untermenü "T-Einstellungen" ausgewählt (Schritt 8). Durch Auswahl eines weiteren Menüpunkts "Statusinfo" (Schritt 9) kann man seinen eigenen aktuellen Status abfragen (Schritt 10). Im gezeigten Beispiel ist die Statusinfo generell für alle Teilnehmer des Mobilfunknetzes freigegeben.

Durch Anwahl weiterer Auswahlfelder kann man die Statusinfo für andere Teilnehmer sperren (Schritt 11) oder z.B. auf die im eigenen Telefonbuch enthaltenen Teilnehmer einschränken (Schritt 12).

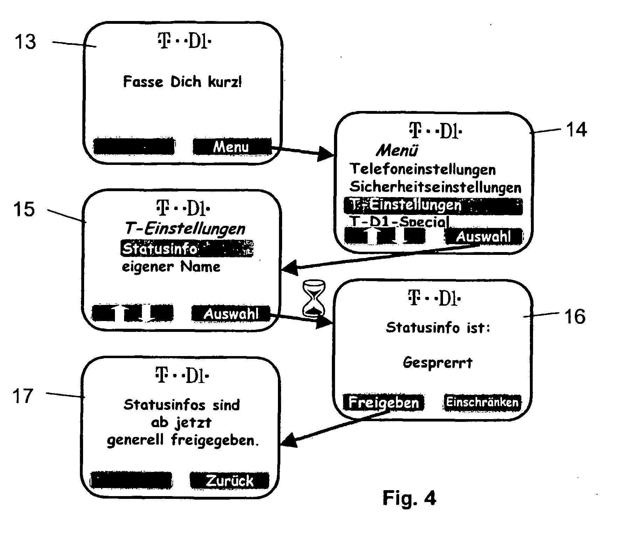

Figur 4 zeigt ein Beispiel für die generelle Freigabe der Statusdaten. Ausgehend vom Hauptmenü des Endgeräts (Schritt 13), wird das Untermenü "T-Einstellungen" ausgewählt (Schritt 14). Durch Auswahl eines weiteren Menüpunkts "Statusinfo" (Schritt 15) kann man seinen eigenen aktuellen Status abfragen (Schritt 16). Dem Teilnehmer wird mitgeteilt, dass seine Statusinfo gesperrt ist. Durch Auswahl des Feldes "Freigeben", kann der Teilnehmer seine eigene Stausinfo generell freigeben (Schritt 17).

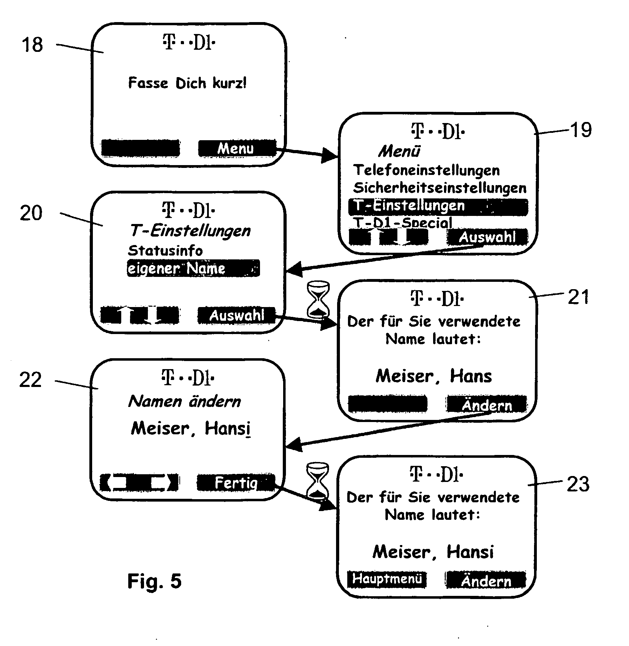

Figur 5 zeigt ein Beispiel für das Auslesen und Editieren des eigenen Namens, so wie er anderen Teilnehmern präsentiert werden soll. Ausgehend vom Hauptmenü des Endgeräts (Schritt 18), wird das Untermenü "T-Einstellungen" ausgewählt (Schritt 19). Durch Auswahl eines weiteren Menüpunkts "eigener Name" (Schritt 20) kann man die Präsentation seines eigenen Namens bei anderen Teilnehmern bestimmen. Zunächst wird dem Teilnehmer sein eigener Name, soweit er bereits eingetragen ist, angezeigt (Schritt 21). Der angezeigte Name kann nun editiert werden (Schritt 22) und wird dann nach Fertigstellen der Editierung in der gewünschten Form übernommen und angezeigt (Schritt 23).

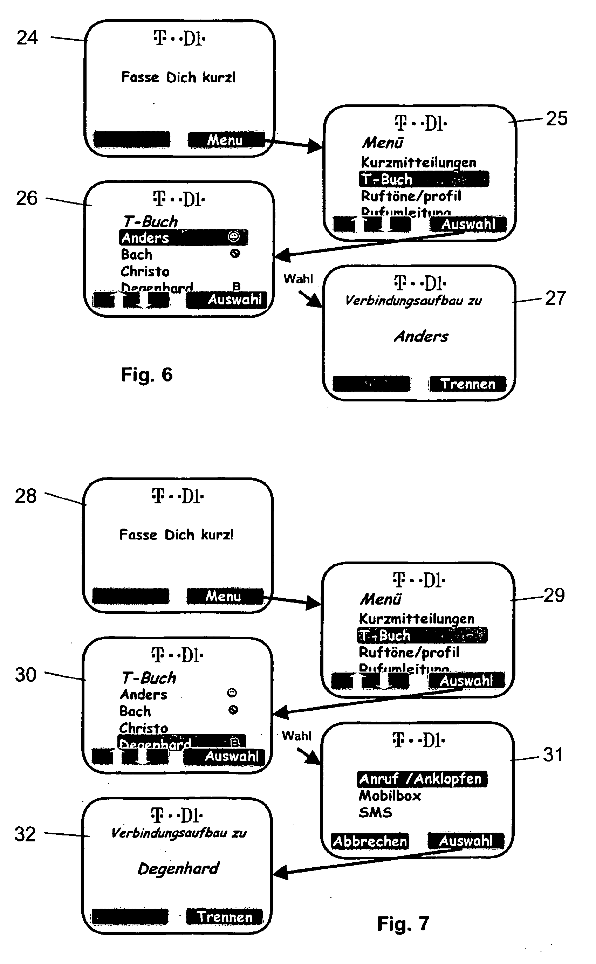

Die Figuren 6 bis 9 beschreiben die Anzeige und Verwendung der Statusdaten in einem fernen Endgerät eines anderen Teilnehmers.

Figur 6 erläutert den Verbindungsaufbau zu einem als frei gekennzeichneten Anschluss. Ausgehend vom Hauptmenü des Endgeräts (Schritt 24), wird das Untermenü "T-Buch" ausgewählt (Schritt 25). Im Menüpunkt "T-Buch" werden dem Teilnehmer die Statusdaten der in seinem persönlichen Telefonbuch abgelegten Teilnehmer angezeigt. Z.B. zeigt das Symbol " 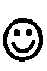 " hinter dem Namenseintrag "Anders" an, dass dieser Teilnehmer im Mobilfunknetz eingebucht ist und dessen Anschluss gerade frei ist und angewählt werden kann (Schritt 26). Durch Auswahl des Namens "Anders" erfolgt ein Verbindungsaufbau (Schritt 27) zum gewählten Anschluss.

Im Gegensatz dazu zeigt z.B. das Symbol " 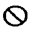 " hinter dem Namenseintrag "Bach" an, dass dieser Teilnehmer zur Zeit nicht erreichbar ist, da dessen Endgerät nicht im Mobilfunknetz eingebucht ist.

Figur 7 erläutert die Möglichkeiten des Teilnehmers bei einem besetztem Anschluss. Ausgehend vom Hauptmenü des Endgeräts (Schritt 28), wird das Untermenü "T-Buch" ausgewählt (Schritt 29). Im Menüpunkt "T-Buch" werden dem Teilnehmer die Statusdaten der in seinem persönlichen Telefonbuch abgelegten Teilnehmer angezeigt. Z.B. zeigt das Symbol "B" hinter dem Namenseintrag "Degenhard" an, dass dieser Teilnehmer im Mobilfunknetz eingebucht ist und dessen Anschluss gerade besetzt ist. (Schritt 30). Es werden nun verschiedene Möglichkeiten: Anrufen/Anklopfen, Mobilbox, SMS angeboten, um mit Degenhard in Kontakt zu treten (Schritt 31). Durch Auswahl des Punktes "Anrufen/Anklopfen" erfolgt ein Verbindungsaufbau mit Anklopfen zu Degenhard (Schritt 32).

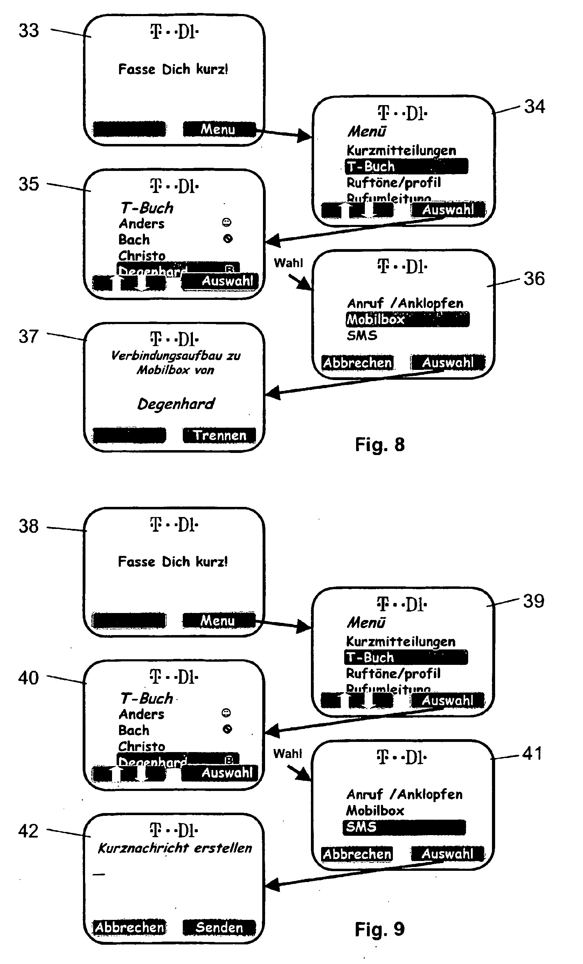

Figur 8 zeigt einen Anruf zu der Mobilbox eines besetzten Anschlusses. Ausgehend vom Hauptmenü des Endgeräts (Schritt 33), wird das Untermenü "T-Buch" ausgewählt (Schritt 34). Im Menüpunkt "T-Buch" werden dem Teilnehmer die Statusdaten der in seinem persönlichen Telefonbuch abgelegten Teilnehmer angezeigt. Z.B. zeigt das Symbol "B" hinter dem Namenseintrag "Degenhard" an, dass dieser Teilnehmer im Mobilfunknetz eingebucht ist und dessen Anschluss gerade besetzt ist (Schritt 35). Es werden nun verschiedene Möglichkeiten: Anrufen/Anklopfen, Mobilbox, SMS angeboten, um mit Degenhard in Kontakt zu treten. (Schritt 36). Durch Auswahl des Punktes "Mobilbox" erfolgt ein Verbindungsaufbau zum Anrufbeantworter von Degenhard (Schritt 37).

Figur 9 zeigt das Absenden einer Kurznachricht (SMS) zu einem besetztem Anschluss. Ausgehend vom Hauptmenü des Endgeräts (Schritt 38), wird das Untermenü "T-Buch" ausgewählt (Schritt 39). Im Menüpunkt "T-Buch" werden dem Teilnehmer die Statusdaten der in seinem persönlichen Telefonbuch abgelegten Teilnehmer angezeigt. Z.B. zeigt das Symbol "B" hinter dem Namenseintrag "Degenhard" an, dass dieser Teilnehmer im Mobilfunknetz eingebucht ist und dessen Anschluss gerade besetzt ist (Schritt 40). Es werden nun verschiedene Möglichkeiten: Anrufen/Anklopfen, Mobilbox, SMS angeboten, um mit Degenhard in Kontakt zu treten (Schritt 41). Durch Auswahl des Punktes "SMS" kann eine Kurznachricht an Degenhard gesendet werden (Schritt 42).

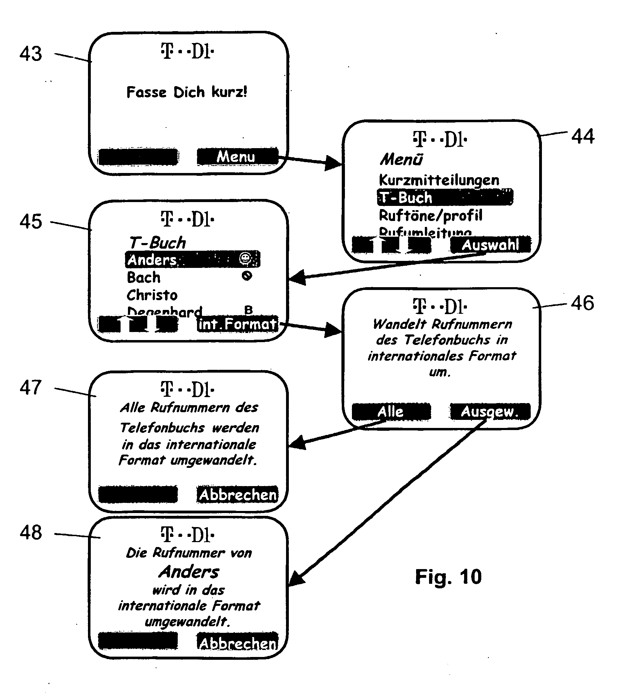

Figur 10 erläutert die Umwandlung der Rufnummern der Telefonbucheinträge eines Teilnehmers in internationales Format. Ausgehend vom Hauptmenü des Endgeräts (Schritt 43), wird das Untermenü "T-Buch" ausgewählt (Schritt 44). Im Menüpunkt "T-Buch" kann die Rufnummer eines oder mehrer im persönlichen Telefonbuch abgelegten Teilnehmer in das internationale Format umgewandelt werden (Schritt 45). Durch Auswahl "Alle" oder "Ausgewählt" in Schritt 46 können alle Rufnummern des Telefonbuchs in internationales Format umgewandet werden (Schritt 47), oder es kann nur die Rufnummer des ausgewählten Teilnehmers "Anders" in internationales Format umgewandelt werden (Schritt 48).

## Patentansprüche

1. Verfahren zur Vereinheitlichung der Bediensteuerung bei Mobilfunkendgeräten, wobei im Mobilfunkendgerät ein MMI-Client installiert wird, der über die Luftschnittstelle mit einem MMI-Server eines Mobilfunknetzes kommuniziert, wobei im MMI-Client verschiedene Bedienprozeduren zur Ausführung von Funktionen des Mobilfunkendgerätes menügesteuert abgelegt sind, und die Ausführung der ausgewählten Funktionen entweder endgerätebasiert anhand von im Mobilfunkendgerät abgelegten funktionalen Prozeduren und / oder netzbasiert anhand von im MMI-Server abgelegten funktionalen Prozeduren erfolgt;
**dadurch gekennzeichnet,**
**dass** das Menü des Endgerätes um eine Funktion erweitert wird, die anhand einer textuellen und/oder graphischen Oberfläche den aktuellen Status eines Anschlusses anderer Teilnehmer auf dem Display des Endgerätes wiedergibt, wobei das Menü dem Teilnehmer vom jeweiligen Status abhängige Auswahlmöglichkeiten anbietet, wie mit dem Anruf verfahren werden soll,
**dass** das Menü des Endgerätes um eine Funktion erweitert wird, die eine Prozedur zur automatischen Abspeicherung von Namen zu einer dem Teilnehmer bekannten Rufnummer vornimmt, und
**dass** das Menü des Endgerätes um eine Funktion erweitert wird, die eine automatische Umwandlung von Rufnummern, die im nationalen Format im Telefonbuch eingetragen sind, in das internationale Format durchführt.

2. Verfahren nach Anspruch 1, **dadurch gekennzeichnet, dass** der MMI-Client per Download über die Luftschnittstelle des Mobilfunknetzes im Mobilfunkendgerät installiert wird.

3. Verfahren nach einem der vorhergehen Ansprüche, **dadurch gekennzeichnet, dass** der MMI-Client auf WAP-, K-Java- oder SAT-Funktionen und Protokollen basiert.

4. Verfahren nach Anspruch 1, **dadurch gekennzeichnet, dass** die Statusinformation angibt, ob ein anderer Telefonanschluß frei, besetzt oder abgeschaltet ist.

5. Verfahren nach einem der Ansprüche 1 oder 4, **dadurch gekennzeichnet, dass** nur Statusinformationen von Anschlüssen angezeigt werden, die im SIM-Telefonbuch des Teilnehmers gespeichert sind und die Berechtigung dafür freigegeben haben.

6. Verfahren nach Anspruch 1, **dadurch gekennzeichnet, dass** der Name vom Netz- bzw. Dienstebetreiber oder vom Inhaber der Rufnummer vorgegeben wird.

7. Verfahren nach einem der Ansprüche 1 oder 6, **dadurch gekennzeichnet, dass** über den MMI-Client und eine bestimmte anwählbare Funktion der einer Rufnummer zugeordnete Name vom Mobilfunknetz herunterladbar und im Mobilfunkendgerät abspeicherbar ist.

## Claims

1. Method for standardising user control in mobile communications terminal devices, wherein in the mobile communications terminal device a MMI client is installed which communicates via the air interface with a MMI server of a mobile communications network, wherein in the MMI client various operating procedures for executing functions of the mobile communications terminal device are stored under menu control and the execution of the selected functions ensues either based on the terminal device on the basis of functional procedures stored in the mobile communications terminal device and/or based on the network on the basis of functional procedures stored in the MMI server, **characterised in that** the menu of the terminal device is extended by a function which on the basis of a textual and/or graphic interface reproduces on the display of the terminal device the current status of a connection of other subscribers, wherein the menu offers the subscriber selection possibilities dependent on the status at the time as to how the call should be proceeded with, that the menu of the terminal device is extended by a function which carries out a procedure for the automatic storage of names for a call number known to the subscriber, and that the menu of the terminal device is extended by a function which carries out an automatic conversion of call numbers recorded in national format in the telephone directory into the international format.

2. Method according to claim 1, **characterised in that** the MMI client is installed in the mobile communications terminal device by downloading via the air interface of the mobile communications network.

3. Method according to any of the preceding claims, **characterised in that** the MMI client is based on WAP, K-Java or SAT functions and protocols.

4. Method according to claim 1, **characterised in that** the status information specifies whether another telephone connection is free, busy or switched off.

5. Method according to claims 1 or 4, **characterised in that** only status information for connections is displayed which is stored in the SIM telephone directory of the subscriber and which has given authorisation for this purpose.

6. Method according to claim 1, **characterised in that** the name of the network or service operator or of the owner of the call number is specified.

7. Method according to any of claims 1 or 6, **characterised in that** via the MMI client and a certain selectable function the name assigned to a call number is downloadable from the mobile communications network and storable in the mobile communications terminal device.

## Revendications

1. Procédé pour uniformiser la commande de manipulation sur des terminaux mobiles, selon lequel il est prévu, installé dans le terminal mobile, un client MMI (interface homme-machine) qui communique par l'intermédiaire de l'interface radio avec un serveur MMI d'un réseau de téléphonie mobile, différentes procédures de manipulation sont stockées dans le client MMI pour exécuter des fonctions du terminal mobile à l'aide d'un menu, et l'exécution des fonctions sélectionnées se fait sur la base du terminal à l'aide de procédures fonctionnelles stockées dans le terminal mobile, et/ou sur la base du réseau à l'aide de procédures fonctionnelles stockées dans le serveur MMI ;
**caractérisé en ce que** le menu du terminal est complété par une fonction qui visualise sur l'affichage du terminal ; à l'aide d'une surface de texte et/ou d'une surface graphique, l'état actuel d'une connexion d'autres abonnés, le menu proposant à l'abonné des possibilités de sélection, dépendantes de l'état, sur la manière dont il doit procéder pour l'appel,
**en ce que** le menu du terminal est complété par une fonction qui effectue une procédure pour la mise en mémoire automatique de noms correspondant à un numéro d'appel connu de l'abonné, et
**en ce que** le menu du terminal est complété par une fonction qui convertit automatiquement en format international des numéros d'appel qui sont inscrits dans le répertoire au format national.

2. Procédé selon la revendication 1, **caractérisé en ce que** le client MMI est installé dans le terminal mobile par téléchargement par l'intermédiaire de l'interface radio du réseau mobile.

3. Procédé selon l'une des revendications précédentes, **caractérisé en ce que** le client MMI est basé sur des fonctions et protocoles WAP, K-Java ou SAT.

4. Procédé selon la revendication 1, **caractérisé en ce que** l'information d'état indique si un autre raccordement téléphonique est libre, occupé ou déconnecté.

5. Procédé selon la revendication 1 ou 4, **caractérisé en ce que** seules les informations d'état de raccordements qui sont en mémoire dans le répertoire SIM de l'abonné et qui ont donné l'autorisation pour cela s'affichent.

6. Procédé selon la revendication 1, **caractérisé en ce que** le nom du fournisseur de réseau ou de services ou du titulaire du numéro d'appel est présenté.

7. Procédé selon la revendication 1 ou 6, **caractérisé en ce que** par l'intermédiaire du client MMI et d'une fonction définie apte à être sélectionnée, le nom, associé au numéro d'appel, du réseau mobile peut être téléchargé et mis en mémoire dans le terminal mobile.
